Europäisches Patentamt

European Patent Office

Office européen des brevets

(11) Veröffentlichungsnummer: **0 260 741**
**A2**

(12) **EUROPÄISCHE PATENTANMELDUNG**

(21) Anmeldenummer: **87201687.8**

(51) Int. Cl.⁴: **G02B 6/44**

(22) Anmeldetag: **07.09.87**

(30) Priorität: **09.09.86 DE 3630659**

(43) Veröffentlichungstag der Anmeldung:
**23.03.88 Patentblatt 88/12**

(84) Benannte Vertragsstaaten:
**DE FR GB IT NL**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT NL**

(72) Erfinder: **Deusser, Peter**
**Hazebrouk Strasse 12**
**D-5000 Köln 80(DE)**
Erfinder: **Boehm. Detlef**
**Baumweg 16**
**D-5206 Neunkirchen-Seelscheid 1(DE)**
Erfinder: **Eiden, Walter**
**Romaneyer Strasse 43**
**D-5060 Bergisch-Gladbach(DE)**
Erfinder: **Becker, Johann A.**
**Zöllnerstrasse 64**
**D-5063 Overath(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Abzweig für ein mehrere LWL enthaltendes optisches Kabel und Verfahren zu seiner Herstellung.**

(57) Die Erfindung betrifft einen Abzweig für ein mehrere LWL innerhalb einer Kabelumhüllung enthaltendes optisches Kabel. Um bei geringem Herstellungsaufwand geringe Zusatzdämpfungen zu erreichen, ist vorgesehen, daß ein von der Kabelumhüllung (3) befreiter Längenabschnitt (1) in gestreckter Lage in einer Abzweigmuffe (9) festgelegt ist, welche sich beidseitig über die Enden der Kabelumhüllung (3) erstreckt und daß ein Ende mindestens eines durchtrennten LWL (5,51) bzw. ein mit ihm verbundener Abzweig-LWL (8) durch eine Abzweighülle (7) geführt ist, welche an der Abzweigmuffe (9) festgelegt ist.

FIG.1

## Abzweig für ein mehrere LWL enthaltendes optisches Kabel und Verfahren zu seiner Herstellung

Die Erfindung bezieht sich auf einen Abzweig für ein mehrere LWL innerhalb einer Kabelumhüllung enthaltendes optisches Kabel.

Wenn bei verlegten, mehrere LWL enthaltenden optischen Kabeln mindestens einer der LWL für einen Abzweig herausgeführt werden soll, muß eine beträchtliche Länge dieses LWL freiliegend verfügbar sein, um eine Verbindung mit dem abzweigenden LWL bzw. LWL-Kabel herstellen zu können, ohne daß bei der Montage einer Steckereinrichtung oder bei der Herstellung einer Spleißverbindung die gegen mechanische Beanspruchung empfindlichen Enden der LWL unzulässig stark gekrümmt werden.

Man könnte, wie es bei elektrischen Kabeln üblich ist, das optische Kabel an der Abzweigstelle insgesamt durchtrennen. Sämtliche LWL müßten an beiden Kabelenden auf einer entsprechenden Länge durch Entfernen der Kabelhülle freigelegt werden. Danach müßten die nicht abzuzweigenden LWL mit einer Verbindungsstelle wieder verbunden werden. Diese zahlreichen Verbindungsstellen erfordern einen erheblichen Montageaufwand und verursachen zusätzliche Dämpfungen.

Der Erfindung liegt die Aufgabe zugrunde, einen Abzweig der eingangs genannten Art so zu gestalten, daß er mit geringem Aufwand herstellbar ist und daß zusätzliche Dämpfungen für die nicht abzuzweigenden LWL vermieden werden.

Die Lösung gelingt dadurch, daß ein von der Kabelhüllung befreiter Längenabschnitt in gestreckter Lage in einer Abzweigmuffe festgelegt ist, welche sich beidseitig über die Enden der Kabelhülle erstreckt und daß ein Ende mindestens eines durchtrennten LWL bzw. ein mit ihm verbundener Abzweig-LWL durch eine Abzweighülle geführt ist, welche an der Abzweigmuffe festgelegt ist. Die Abzweighülle ist ein die LWL locker umgebender Schlauch und kann der Mantel eines abzweigenden optischen Kabels sein.

Durch die erfindungsgemäße Lösung ergeben sich die Vorteile, daß die nicht abzuzweigenden LWL nicht durchtrennt zu werden brauchen, so daß der Montageaufwand wesentlich verringert ist und weiterhin natürlich keine zusätzlichen Dämpfungen entstehen können. Der relativ lange von der Kabelumhüllung befreite Abschnitt des optischen Kabels ist durch die Abzweigmuffe festgelegt und geschützt.

Vorteilhaft ist die Kabelumhüllung im Bereich der Abzweigmuffe auf einer Länge von 150 bis 250 mm entfernt.

Eine vorteilhafte Ausführungsform der Erfindung ist dadurch gekennzeichnet, daß das Ende des LWL innerhalb der Abzweigmuffe mit dem Ende eines durch die Abzweighülle in die Muffe geführten Abzweig-LWL gekoppelt ist. Dabei ist auch die Verbindungsstelle mit dem Abzweig-LWL innerhalb der Abzweigmuffe geschützt.

Wenn für die Enden der abzuzweigenden LWL eine große Länge von beispielsweise mehr als 1 m erforderlich ist, was insbesondere dann der Fall ist, wenn die Verbindung mit dem Abzweig-LWL bzw. Abzweig-Kabel außerhalb der Abzweigmuffe in einer gewissen Entfernung von dieser hergestellt werden soll, hat sich eine Weiterbildung der Erfindung als besonders vorteilhaft erwiesen, welche dadurch gekennzeichnet ist, daß im Abstand von der Abzweigmuffe ein von der Kabelhülle befreiter Trennbereich angeordnet ist, innerhalb dessen das aus der Abzweigmuffe herauszuführende Ende des LWL abgetrennt ist. Der Trennbereich liegt vorzugsweise von der Abzweigmuffe um 1000 bis 2000 mm entfernt.

Ein besonders geeignetes Verfahren zur Herstellung eines Abzweigs unter Verwendung des vorbeschriebenen zusätzlichen Trennbereichs ist dadurch gekennzeichnet, daß Abschnitte der Kabelumhüllung im Bereich der Abzweigmuffe und des Trennbereichs entfernt werden, daß im Trennbereich ein LWL durchtrennt und dessen Ende durch das Zwischenstück der Kabelumhüllung in den Bereich der Abzweigmuffe gezogen wird. Dabei wird das Herausziehen des Endes des LWL dadurch erleichtert, daß vorher mindestens ein nicht optisches Aufbauelement aus dem Zwischenstück der Kabelumhüllung gezogen wird.

Die verbleibende Länge des Trennbereichs kann erheblich verringert oder zu Null werden, wenn der Trennbereich durch einfache Durchtrennung der Kabelumhüllung und Schieben des Zwischenstücks der Kabelumhüllung in den Bereich der Abzweigmuffe hin gebildet wird, und wenn nach dem Hindurchziehen des Endes des LWL das Zwischenstück an das gegenüberliegende Ende der Kabelumhüllung geschoben wird.

Die Erfindung und deren Vorteile werden anhand der Beschreibung von in der Zeichnung dargestellten vorteilhaften Ausführungsbeispielen näher erläutert.

Figur 1 zeigt schematisch eine erste Ausführungsform der Erfindung

Figur 2 zeigt schematisch eine zweite Ausführungsform der Erfindung

Figur 3 zeigt optische Kabel mit an der Abzweigstelle entfernter Kabelhülle und mit einem weiteren Trennbereich zu verschiedenen Verfahrensstadien a, b und c.

Auf einem Längenbereich 1 des optischen Kabels 2 ist die Kabelumhüllung 3 entfernt, so daß dort die LWL 4 freiliegen. Das Ende des abgezweigten und am rechten Teil der Kabelumhüllung 3 durchtrennten LWL 5 ist mittels des Verbindungselements 6 mit einem zugeordneten, durch die Abzweighülle 7 zugeführten Abzweig-LWL 8 verbunden. Da die LWL 4 ungetrennt und gerade verlaufend geführt sind, entsteht in diesen keine zusätzliche Dämpfung.

Die Abzweighülle 7 sowie die Enden der Kabelumhüllung 3 sind zugfest mit der Grundplatte 9 der Abzweigmuffe verbunden, was jeweils durch eine Schelle 10 angedeutet ist. Die Abzweigmuffe wird z.B. durch einen Gehäusedeckel so verschlossen, daß insbesondere die freiliegenden Bereiche der LWL 4,5 und 8 gegen äußere Einflüsse geschützt sind.

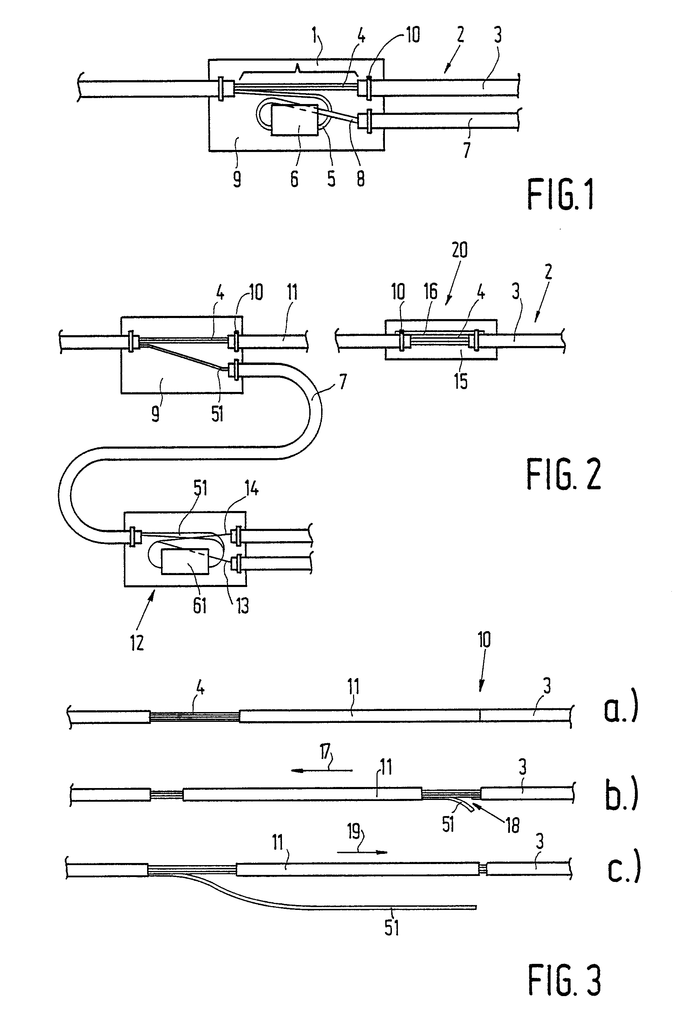

Bei der besonders vorteilhaften Ausführungsart nach Figur 2 sind gleiche Teile wie in Figur 1 beziffert. Damit besonders lange Enden der LWL 5 verfügbar sind, ohne daß die Länge der Abzweigmuffe vergrößert werden muß, ist zusätzlich ein Trennbereich 20 vorgesehen, in welchem die Kabelumhüllung 3 auf einem gewissen Längenbereich entfernt ist, so daß dort ebenfalls die LWL 4 freigelegt sind.

Die Gruppe 51 von LWL, welche eine z.B. bandförmige Einheit bilden, ist im Trennbereich 20 durchtrennt. Nach dem Hindurchziehen durch das Zwischenstück 11 der Kabelumhüllung 3 steht ein beliebig lang wählbares Ende der Gruppe 51 der abzuzweigenden LWL zur Verfügung, welche in Figur 2 direkt durch die Abzweighülle 7 in eine gesonderte und von der Abzweigmuffe entfernt liegende Verbindungsmuffe 12 bekannter Bauart geführt sind, in welcher mittels des Verbindungselements 61 die Verbindungen mit abgehenden LWL 13 und 14 hergestellt sind.

Der Trennbereich 20 ist durch eine Trennmuffe zu schützen, auf deren Grundplatte 15 die Enden der Kabelumhüllung zugfest befestigt sind, was wiederum durch Schellen 10 angedeutet ist.

Eine Zugentlastung könnte auch allein durch die dort an beiden Enden der Kabelumhüllung 3 befestigte zugfeste Lasche 16 übertragen werden, so daß dann das Gehäuse der Trennmuffe lediglich Abdeckfunktionen erfüllen müßte.

Das Hindurchziehen der Gruppe 51 der abzuzweigenden LWL wird erleichtert, ohne daß auf die LWL gefährliche Ziehkräfte aufgebracht werden müssen, wenn vorher aus dem Zwischenstück 11 der Kabelumhüllung 3 mindestens ein Aufbauelement wie insbesondere ein zentrales Zugentlastungselement entfernt wird.

Anhand der Figur 3 wird erkennbar, wie man erreichen kann, daß im Trennbereich 20 nur ein minimaler Längenbereich der LWL 4 ohne Umhüllung verbleibt.

Zunächst wird (Stadium a) nur eine einfache ringförmige Trennung der Kabelumhüllung 3 vorgenommen. Danach wird (Stadium b) das Mittelstück 11 der Kabelumhüllung 3 in Richtung des Pfeils 17 in den vorher für den Abzweig gebildeten Lückenbereich geschoben. Dann kann die Gruppe 51 der abzuzweigenden LWL an der Stelle 18 durchtrennt werden. Danach wird (Stadium c) das Zwischenstück 11 zurückgeschoben in Pfeilrichtung 19, bis zumindest annähernd die dortigen Enden der Kabelumhüllung 3 aneinander stoßen. Nunmehr kann das Ende der Gruppe 51 der LWL aus dem Zwischenstück 11 herausgezogen werden.

**Ansprüche**

1. Abzweig für ein mehrere LWL innerhalb einer Kabelumhüllung enthaltendes optisches Kabel, dadurch gekennzeichnet, daß ein von der Kabelumhüllung (3) befreiter Längenabschnitt (1) in gestreckter Lage in einer Abzweigmuffe (9) festgelegt ist, welche sich beidseitig über die Enden der Kabelumhüllung (3) erstreckt und daß ein Ende mindestens eines durchtrennten LWL (5,51) bzw. ein mit ihm verbundener Abzweig-LWL (8) durch eine Abzweighülle (7) geführt ist, welche an der Abzweigmuffe (9) festgelegt ist.

2. Abzweig nach Anspruch 1, dadurch gekennzeichnet, daß die Kabelumhüllung (3) im Bereich der Abzweigmuffe (9) auf einer Länge (1) von 150 bis 250 mm entfernt ist.

3. Abzweig nach Anspruch 1 oder 2, dadurch gekennzeichnet, daß das Ende des LWL (5) innerhalb der Abzweigmuffe (9) mit dem Ende einer durch die Abzweighülle in die Muffe geführten Abzweig-LWL (8) gekoppelt ist.

4. Abzweig nach einem der Ansprüche 1 bis 3, dadurch gekennzeichnet, daß im Abstand von der Abzweigmuffe (9) ein von der Kabelhülle befreiter Trennbereich (20) angeordnet ist, innerhalb dessen das aus der Abzweigmuffe (9) herauszuführende Ende des LWL (5) abgetrennt ist.

5. Abzweig nach Anspruch 4, dadurch gekennzeichnet, daß die Enden der Kabelumhüllung (3) im Trennbereich (20) durch ein beide Enden der Kabelumhüllung (3) zugfest erfassendes Zugentlastungselement (15,16) verbunden sind.

6. Abzweig nach einem der Ansprüche 4 oder 5, dadurch gekennzeichnet , daß der Trennbereich (20) von der Abzweigmuffe (9) 1000 bis 2000 mm entfernt ist.

7. Verfahren zur Herstellung eines Abzweigs nach einem der Ansprüche 4 bis 6, dadurch gekennzeichnet, daß Abschnitte der Kabelumhüllung (3) im Bereich der Abzweigmuffe (9) und des Trennbereichs (20) entfernt werden, daß im Trennbereich (20) mindestens ein LWL (5,51) durchtrennt und dessen Ende durch das Zwischenstück (11) der Kabelumhüllung (3) in den Bereich der Abzweigmuffe (9) gezogen wird.

8. Verfahren nach Anspruch 7, dadurch gekennzeichnet, daß vor dem Hindurchziehen des Endes des LWL (51) durch das Zwischenstück (11) mindestens ein nicht optisches Aufbauelement aus dem Zwischenstück (11) der Kabelumhüllung (3) gezogen wird.

9. Verfahren nach Anspruch 7 oder 8, dadurch gekennzeichnet, daß der Trennbereich (20) durch einfache Durchtrennung der Kabelumhüllung (3) und Schieben des Zwischenstücks (11) der Kabelumhüllung (3) zum Bereich der Abzweigmuffe (9) hin gebildet wird, und daß nach dem Hindurchziehen der Enden des LWL (51) das Zwischenstück (11) an das gegenüberliegende Ende der Kabelumhüllung (3) geschoben wird.

**FIG.1**

**FIG. 2**

a.)

b.)

c.)

**FIG. 3**